# EUROPEAN PATENT SPECIFICATION

(11) **EP 2 240 052 B1**
(45) Date of publication and mention of the grant of the patent: **08.08.2012**
(21) Application number: 08865524.6
(22) Date of filing: 19.12.2008
(51) Int. Cl.: A47J 27/17, A47J 43/07

(54) **EQUIPMENT FOR FOOD PREPARATION**
ANLAGE FÜR LEBENSMITTELZUBEREITUNG
ÉQUIPEMENT POUR LA PRÉPARATION D'ALIMENTS

(30) Priority: 21.12.2007 IT BO20070841
(43) Date of publication of application: 20.10.2010
(73) Proprietor: Malavasi, Giuseppe, 40010 San Marino di Bentivoglio (BO) (IT)
(72) Inventor: Malavasi, Giuseppe, 40010 San Marino di Bentivoglio (BO) (IT)
(74) Representative: Provvisionato, Paolo
(86) International application number: PCT/IB2008/055455
(87) International publication number: WO 2009/081365

(56) References cited:
- EP-A- 0 483 588
- WO-A-2007/049116
- CH-A- 192 335
- DE-B- 1 164 050
- DE-C- 605 215
- US-A- 3 739 710

## Description

### FIELD OF THE INVENTION

Generally, the present invention relates to the field of equipment for food preparation and in particular equipment including a double walled container.

### PRIOR ART

Various types of equipment for food preparation, which employs steam to heat the food are known in the state of art. The international patent application WO 2007/049116 of the same applicant discloses an equipment for food preparation in which a heat exchanger element is arranged in the space defined between the double walls of a container in order to transfer heat into the interior of the container, thereby enabling efficient heating of food.

The document US-3739710 discloses a food preparation equipment comprising

double-walled food preparation container.

Although an efficient heat transfer may be accomplished in this known device, efficient control of the steam flow may be difficult, thereby potentially contributing to increased effort for using the device in various situations, such as in the field of commercial food preparation, and in the like.

It is therefore an object of the present invention to provide food preparation systems and methods that allow enhanced steam flow control in double wall food containers.

### DESCRIPTION

Generally the present invention relates to systems to prepare food using a double walled container filled with steam and to the control of the steam flow between the double wall of the container.

In one aspect the object is solved by a food preparation container, which comprises a double wall defining a cavity and at least one valve to let a fluid flow along a flow path inside the cavity. Hence the flow of steam generated during the use of this apparatus inside the cavity defined by the double walls of the container may be regulated and steam may efficiently be kept inside the double wall, while also reducing the amount of water which is condensed inside the cavity.

In the present invention the object is solved by a food preparation equipment which comprises a food preparation container as in the above mentioned first aspect, an operating unit and a fluid-dynamic circuit wherein the container is removably connected to the operating unit and the fluid-dynamic circuit is interrupted by disconnecting the container from the operating unit. In this system the container can be removed from the part of the system which produces the steam so that the container can be easily cleaned. Hence, the container can be easily connected and disconnected to the rest of the system.

A further embodiment relates to a food preparation container, wherein the sides of the container are double walled, while the base of the container is single walled. This embodiment has the advantage that no food sticks on the base of the container, which may happen in conventional containers that are heated via the base, while the sides can be easily cleaned.

In a further embodiment of the present invention the food preparation container comprises a tool to clean the side walls of the container.

In a further embodiment the present invention relates to a food preparation equipment as above mentioned , wherein the operating unit comprises an inlet and an outlet valve and wherein a boiler generates steam which flows in the fluid dynamic circuit through the outlet valve, the operating unit and the inlet valve of the container, wherein the steam diffuses in the space comprised between the double-walled container, condenses and flows as liquid water through the outlet valve of the process container and the inlet valve of the operating unit returns back into the boiler.

In a further embodiment the present invention relates to a food preparation equipment as above mentioned , wherein the fluid dynamic circuit is a closed circuit. This embodiment has the advantage that the food preparation equipment does not have to be connected with a water tap.

In a further embodiment the present invention relates to a food preparation equipment as above mentioned , wherein the steam diffuses in the space between the double walled container and it is under pressure. Using the steam under pressure, has the advantage that the steam under pressure can reach higher temperatures.

In a further embodiment the present invention relates to a food preparation equipment as above mentioned , wherein the fluid-dynamic circuit is hermetic, thereby reducing leakage.

In a further embodiment the present invention relates to a food preparation equipment as above mentioned , wherein the operating unit comprises a motor. The motor can be used to move tools for the preparation of the food inside the container.

In a further embodiment the present invention relates to a food preparation equipment as above mentioned , wherein the operating unit comprises at least an electrically controlled valve.

### BRIEF DESCRIPTION OF THE DRAWINGS

Further advantages, objects and embodiments of the present invention are defined in the appended claims and will become more apparent with the following detailed description when taken with reference to the accompanying drawings, in which:
Fig. 1 schematically shows the equipment (1) for food preparation according to the present invention;
Fig. 2 schematically shows the operating unit (27) according to an embodiment of the present invention;
Fig. 3 schematically shows the container according to an embodiment of the present invention;
Fig. 4 schematically shows a top view of the container comprising a tool mounting element according to an embodiment of the present invention;
Fig. 5 schematically shows a view of the container from the bottom comprising a transmission element according to an embodiment of the present invention;
Fig. 6 schematically shows a top view of the container according to an illustrative embodiment of the present invention;
Fig. 7 schematically shows an upside down view of the container according to an embodiment of the present invention;
Fig. 8 schematically shows a section view of one of the valve of the container according to an embodiment of the present invention;
Fig. 9 schematically shows a section view of the inlet valve of the operating unit according to an embodiment of the present invention;
Fig. 10 schematically shows a horizontal section view of the container according to an embodiment of the present invention;
Fig. 11 schematically shows a horizontal section view of the container according to a different embodiment of the present invention.

### DETAILED DESCRIPTION

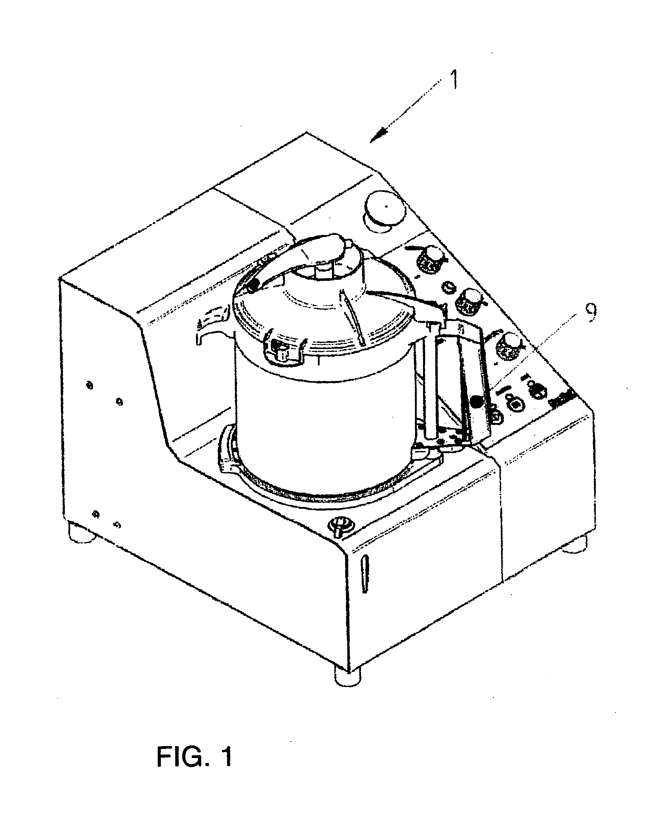

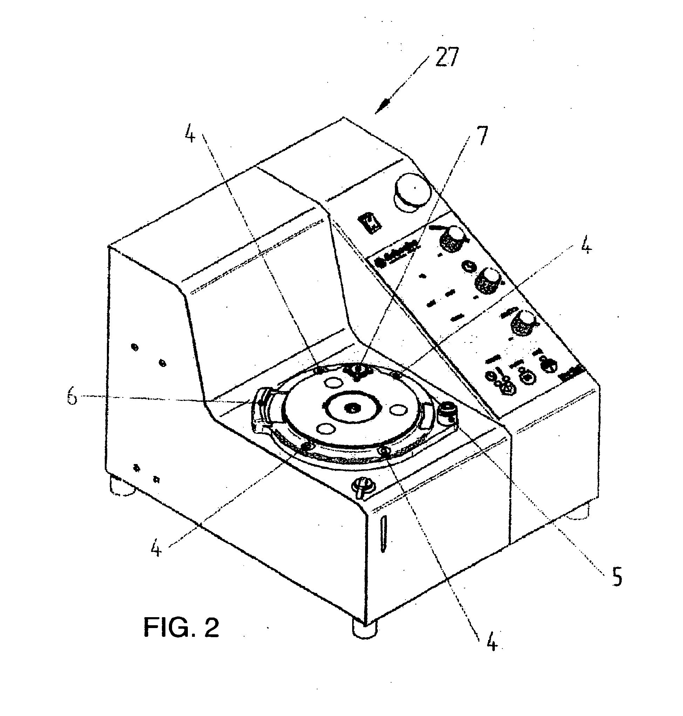

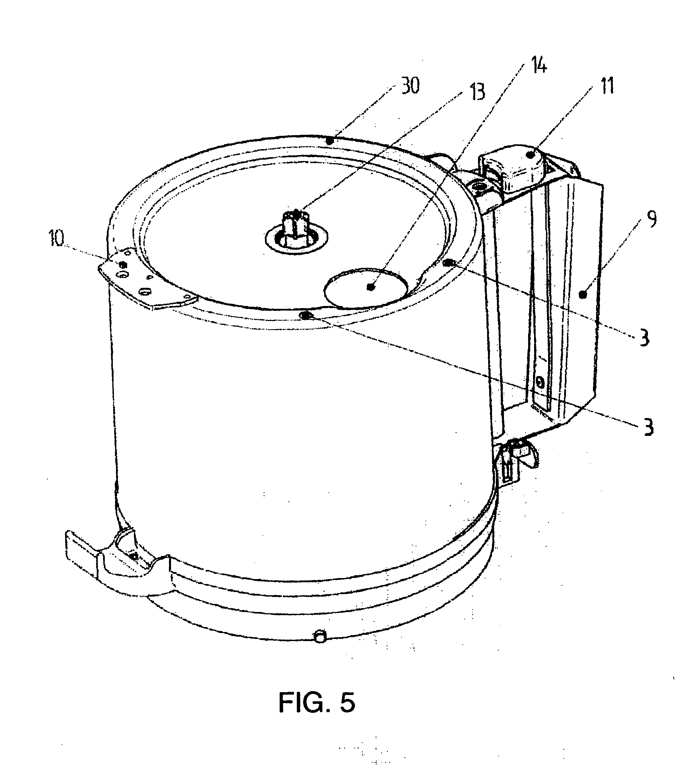

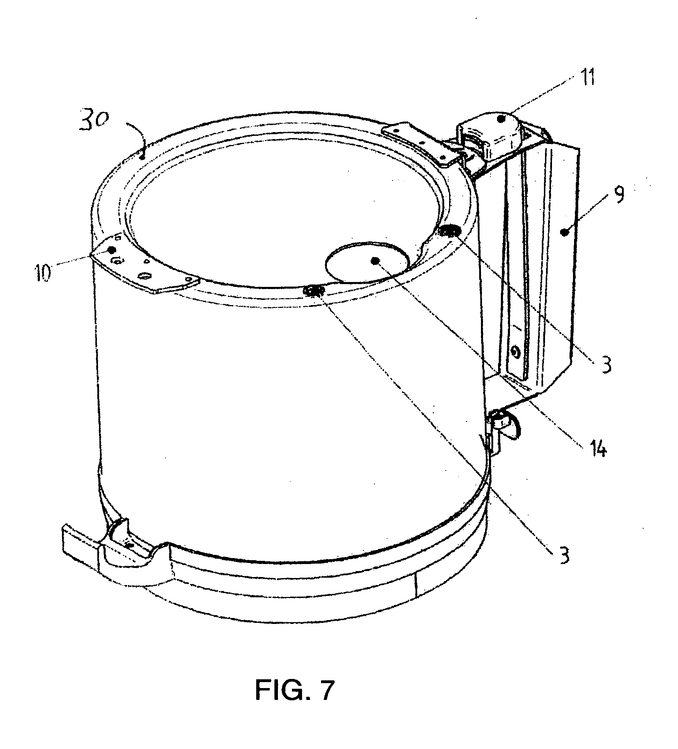

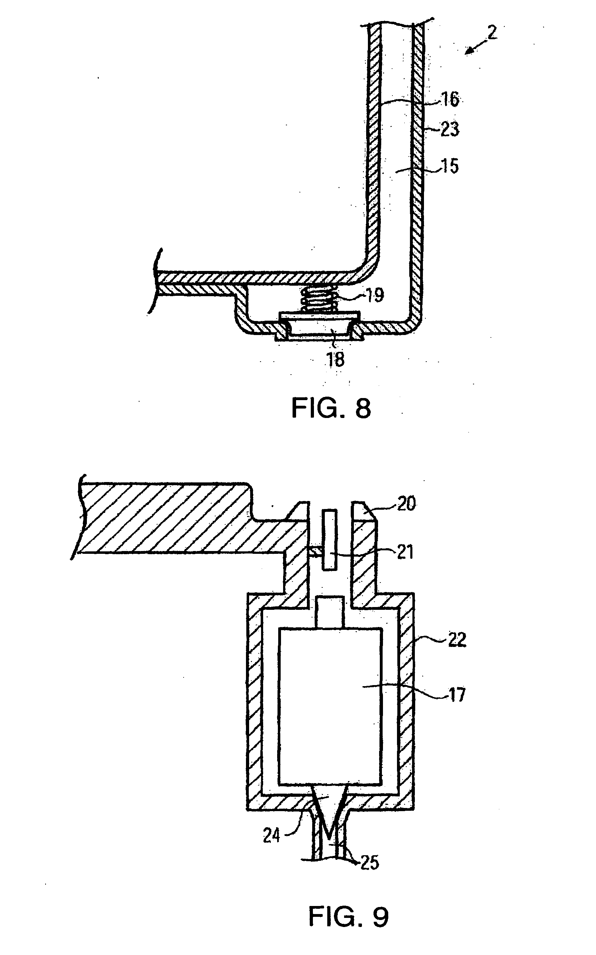

Generally, the present invention relates to an equipment for the preparation of food. In one embodiment the equipment comprises an operating unit 27 and a container, as shown in Figs. 1 and 2. The container is a double walled container as it is shown in Fig. 8. Between the external wall 23 and the internal wall 16 there is a gap or cavity 15. The cavity 15 defines an external rim 30 on the bottom of the container, as shown in Figs. 5 and 7. The cavity 15 comprises a heat exchanger medium. In particular the heat exchanger medium can be steam. The cavity is located between the side walls of the container, while no cavity is present on the base of the container as shown in Fig. 8, therefore the heat to prepare the food is mainly coming from the side walls and not from the base. This embodiment has the advantage that the side walls can be easily cleaned after the use employing a cleaning tool to remove remains food which is sticking on the side walls. This would be difficult for the base of the container and, therefore, it is not directly heated.

The cavity 15 between the double walls 16, 23 is provided with one or more apertures in order to let the steam diffuse inside the cavity. In particular the cavity can be provided with two openings, one to let the steam in and the other to let the condensed water or steam out. In a preferred embodiment according to the present invention the two openings of the cavity of the container are provided with a valve 3 each as shown in Fig. 5 and 7. The valves allow controlled exchange of heat between the cavity and the external environment. In particular the valves control the flow of steam in the cavity. In one embodiment the valves are positioned on the bottom of the container. This has the advantage that the cavity is more uniformly filled because the steam which comes from the bottom moves to the upper part of the cavity, while the condensed water accumulates on the bottom part of the cavity and it can easily exit the cavity.

The steam diffuses inside the container corresponding to a flow path, which starts from the inlet aperture or valve of the container, and includes all the cavity between the double walls of the container and ends in the outlet aperture or valve of the container.

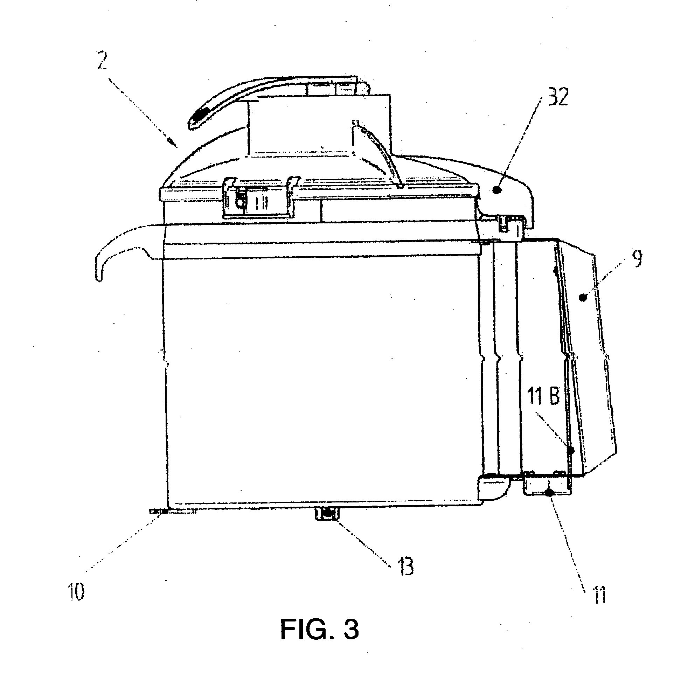

The container 2 is connected in a removable way to the operating unit 27. The container comprises two connecting elements 10, 11 as shown in Figs. 3, 5 and 7. The connecting elements of the container 10, 11 can be engaged with the respective connecting elements 5 and 6 of the operating unit 27 as shown in Fig. 2. The connecting element 10 of the container is connected to the handle 9 of the container 2 and it can be activated by pressing with the hand the handle. The container 2 can be connected/disconnected to/from the operating unit with a single movement using only one hand due to a pressure actuated fastener included in the handle.

The operating unit 27 comprises a boiler in order to generate steam. The steam diffuses then through conduits in the cavity 15 of the container 2. The operating unit 27 also comprises two apertures in order to let the steam out from the operating unit into the container and to collect the condensed water from the cavity of the container. In a preferred embodiment according to the present invention the apertures of the operating unit are provided with valves 4 as shown in Fig. 2. One of the two valves is an outlet valve which let the steam flow out the operating unit into the container, while the other valve is an inlet valve which allows the steam and the condensed water flow from the cavity of the container to the operating unit. The operating unit 27 and the container 2 therefore form a fluid-dynamic circuit. The steam is generated in the boiler, flows through the outlet valve of the operating unit and the inlet valve of the container, diffuses inside the cavity 15 defined by the double walls of the container and flows through the outlet valve of the container and the inlet valve of the operating unit back to the boiler. The fluid-dynamic circuit is therefore a closed circuit. When the container is connected to the operating unit the valves of the container 3 and the valves of the operating unit 4 are positioned one on the top of the other, so that the fluid-dynamic circuit is complete. The valves of the operating unit are provided with a sheath element 20 each as shown in Fig. 9 for the inlet valve. The sheath elements make the fluid-dynamic circuit hermetic. In another embodiment of the present invention the sheath elements can be connected to the valves of the container. When the container is disconnected from the operating unit the fluid-dynamic circuit is automatically interrupted. By connecting the container with the operating unit the fluid-dynamic circuit is automatically made hermetic with no further adjustment required.

The inlet and outlet valve of the container are shown in Fig. 8.

They comprise a spring 19 and a closing element 18. The spring is connected to the inside wall of the container and it presses the closing element 18 against the aperture. The valves of the operating unit 27 comprise a bar 21 as shown in Fig. 9 for the inlet valve of the operating unit. When the container and the operating unit are connected, the bar 21 of the valves of the container presses the closing element 18 so to open the valve of the container and to allow the steam to diffuse inside the cavity 15 of the container. Therefore the connection of the container with the operating unit causes the automatic opening of the valves 4 of the container.
As soon as the container 2 is disconnected the closing element 18 blocks the aperture of the cavity so that no steam or water can drop from the container. This is a significant advantage which increases the security of the container.

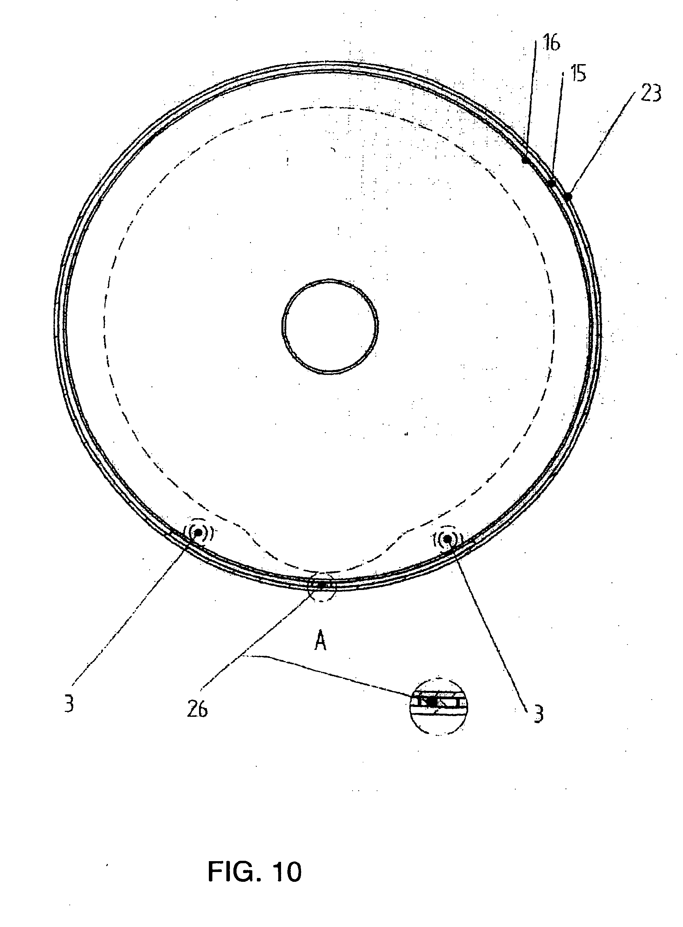

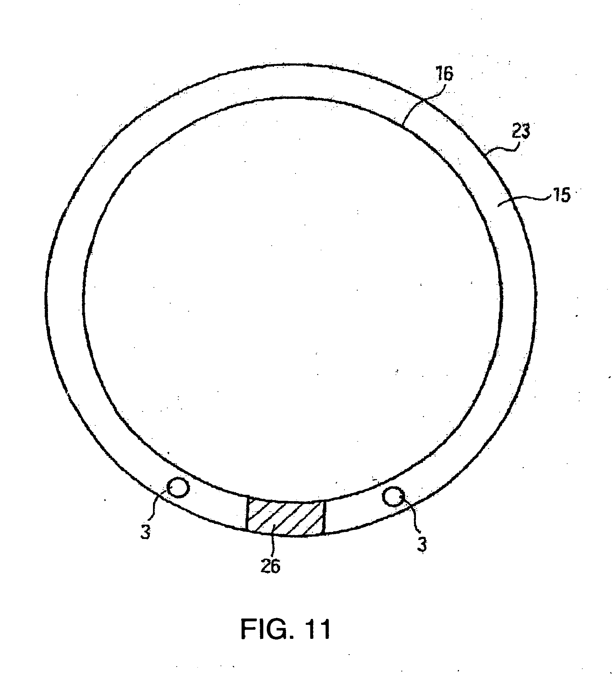

Figs. 10 and 11 shows a horizontal section from the top of the container. Inside the cavity there is also a separator element 26, which extends along all the height of the container form the top to the bottom. The steam which is in the cavity cannot diffuse through the separator. In a preferred embodiment of the present invention the two valves of the container are positioned close to the separator but on opposite sides as shown in said figures. This has the advantage that the steam which is entering from one valve has to diffuse along almost all the circumference of the container before exiting the cavity via the other valve. In this way the steam can better deliver heat to the walls of the container. The result is that in this way the container can heat up the food faster and in a more uniform way. The steam in the cavity is under pressure to make sure that all the cavity is filled with steam. In an embodiment of the present invention the steam can reach pressure around 2 bars. The temperature of the steam can reach values between 120-138°C. This temperature is lower than the temperature reached heating using a flame which has a temperature around 250-280°C and therefore there is not the risk that the food bakes and sticks on the walls of the container.

The inlet valve of the operating system is shown in Fig. 9. This valve presents the feature that it let the water go through but it stops the steam. This is achieved using a floating element 17 which is located inside body of the valve 22. The bottom part of the body 22 is provided with an outlet conduit 25 which brings the condensed water back to the boiler. When the body 22 of the valve is empty or filled just with steam the floating element 17 lies on the bottom wall of the body 22 of the valve and a spike 24 blocks the outlet conduit 25. When water flows inside the inlet valve of the operating unit or steam condenses inside the body 22 of the valve, the water accumulates on the bottom part of the body 22. As soon as the water reaches a given level in the bottom of the body 22 the floating element 17 starts to float in the water, opening in this way the outlet conduit 25 and allowing the water to flow back to the boiler. In this way the steam is kept inside the container, while the condensed water can flow back to the boiler.

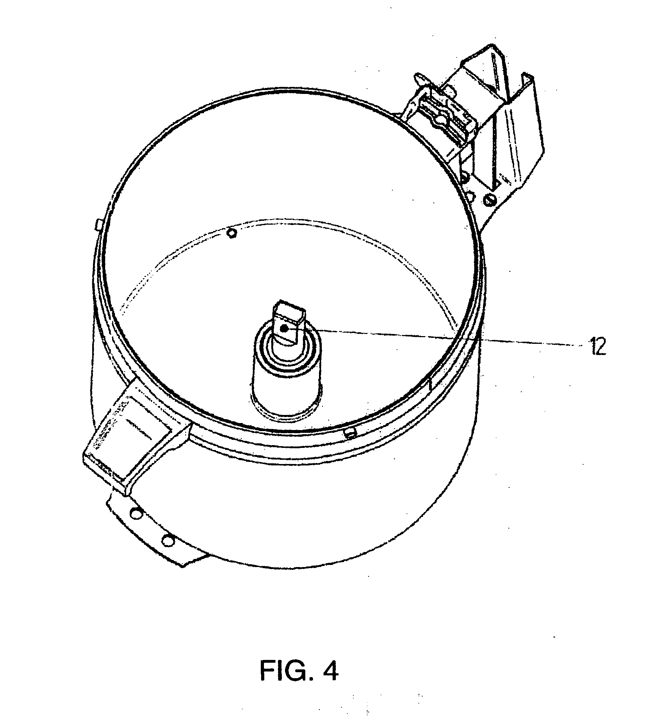

In Fig. 4 it is shown a top view of the container. The container comprises a tool mounting element 12 which is located on the base of the container for mounting a tool. On the element 12 can be mounted any kind of tool to process the food and in particular a tool for mixing or agitating or cutting food. The tool can be easily connected and disconnected from the tool mounting element. The tool mounting element 12 is connected with a transmission element 13, as shown in figure 5, which is located on the bottom of the container and which is configured to transmit the movement of a motor which is positioned inside the operating unit 27. By connecting the container 2 with the operating unit 27 the transmission element is automatically connected with the motor of the operating unit and the tool to process the food is ready to be used. No further adjusting of settings are required. In a further particular embodiment according to the present invention the tool to process the food is connected with a top cover 32 of the container or with another part of the container.

During operation the heat is delivered to the food in the container mainly by the side walls. This feature has also the advantage that, when the tool to process the food is rotating with a relative high velocity, most of the food is close to the side walls and therefore the time needed to prepare the food is reduced.

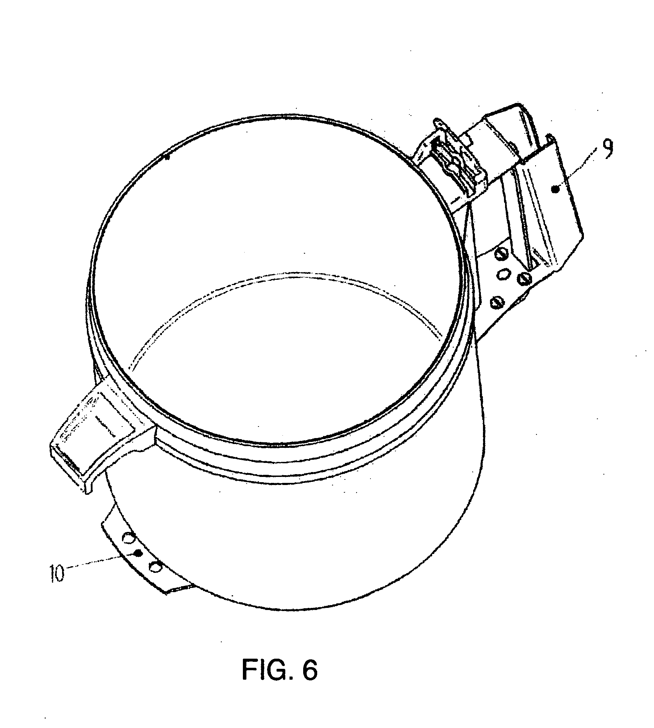

In Fig. 6 is shown a further embodiment according to the present invention in which the container has no tool to process the food and no tool mounting element. In this embodiment the equipment of the present invention can be used to cook or heat up foods. Fig. 7 shows a view of the bottom part of the container for the same embodiment according to the present invention without the transmission element.

The operating unit 27 comprises also a temperature sensor 7 as shown in Fig. 2. When the container is connected with the operating unit the temperature sensor is in correspondence with the recess 14 on the external bottom part of the container as shown in Figs. 5 and 7, so that the sensor can measure the temperature on the inside wall of the container. By connecting the container with the operating unit the sensor is ready to be used without any further adjusting.

The operating unit 27 further comprises a programmable logic controller (PLC) so that the equipment can be programmed to execute predetermined processes. The system can be for example programmed to reach a given temperature and then to keep said temperature for a given time. The reach of a given temperature is dependent from the amount of food present in the container and the instantaneous temperature inside the container can be monitored using the temperature sensor 7. The system can be also programmed to periodically let steam in the cavity of the container for a given time and periodically stop the flow of steam in the container for a given time, in order to avoid thermal shocks for particular delicate food as for example chocolate. In a further embodiment according to the present invention it is also possible to program the system to interrupt the rotation of the tool to process the food.

According to an embodiment of the present invention the fluid-dynamic circuit starts from the boiler, comprises the conduits which bring the steam to the outlet aperture or valve of the operating unit, it further comprises the outlet aperture or valve of the operating unit, the inlet aperture or valve of the container, the cavity between the double walls of the container, the outlet aperture or valve of the container, the inlet aperture or valve of the operating unit and the conduits to bring the condensed water back to the boiler.

In a further particular embodiment according to the present invention the container comprises two apertures without the valves or just with one valve. In a further embodiment the container and the operating unit are provided with more than one inlet and outlet valve each. In a further embodiment according to the present invention the valves can be located anyway on the container as long as they are in contact with the cavity and they are not necessarily positioned on the bottom of the container. In a further embodiment of the present invention also the base of the container can be at least in part double walled and steam can circulate also in this bottom part of the container.

In a further embodiment of the present invention in the bottom part of the cavity is located a slope decreasing from the inlet valve to the outlet valve, so to facilitate the drain of the condensed water inside the cavity. One significant advantage of the present invention is that it has a high efficiency. In fact according to the present invention, approximately 90% of the generated heat reaches the food, while common system using a flame to heat have an efficiency of about 30%. Therefore the present invention can heat up or cook the foods in a shorter time and saving energy.

## Claims

1. A food preparation equipment comprising a food preparation container (2), comprising a double wall (16, 23) defining a closed cavity (15) and at least one valve (3) to control a fluid flow along a flow path inside the cavity, an operating unit (27) and a fluid-dynamic circuit, wherein the container (2) is removably connected to the operating unit (27); and the fluid-dynamic circuit is interruptable by disconnecting the container (2) from the operating unit (27).

2. The food preparation equipment as in claim 1, wherein the food preparative container (2) further comprises a first valve (3) and a second valve (3), which connect the cavity (15) with the external environment, wherein one of the valve is a fluid inlet valve and the other one is a fluid outlet valve.

3. The food preparation equipment as in claim 1 or 2, wherein the container (2) comprises a tool to process the food.

4. The food preparation equipment as in one of previous claims, wherein a separator (26) is disposed inside the cavity along all the height of the container (2).

5. The food preparation equipment as in one of previous claims, wherein the flow path extends over all the cavity (15).

6. The equipment of claim 1 wherein the operating unit (27) comprises a heater.

7. The equipment of claim 1 or 6, wherein the operating unit (27) comprises a fluid outlet valve and a fluid inlet valve.

8. The equipment of one of the claims 1, 6, 7, wherein the operating unit (27) comprises a fixing element (5) to connect the process container (2) to the operating unit (27).

9. The equipment of one of the claims 1, 6-8, wherein the operating unit (27) comprises opening elements (21) which open the valves (3) of the container (2) when the container is connected to the operating unit (27).

10. The equipment of one of the claims 7-9, wherein the inlet valve of the operating unit (27) is configured to let the water pass through and to stop the steam.

11. The equipment of claim 10, wherein the inlet valve comprises a floating element (17).

12. The equipment of one of the claims 1, 6-11, wherein the container (2) comprises a handle (9) with a device, which under application of an external force allows the container to be disconnected from the operating unit (27).

13. The equipment of one of the claims 1, 6-12 comprising a sensor (7) to measure the temperature of the internal wall (16) of the process container (2).

14. The equipment of one of the claims 1, 6-13, wherein the operating unit (27) comprises a programmable control system.

## Patentansprüche

1. Nahrungsmittelzubereitungsanlage, die einen Nahrungsmittelzubereitungsbehälter (2) mit einer Doppelwand (16, 23), die einen geschlossenen Hohlraum (15) definiert, und weinigstens einem Ventil (3), um eine Fluidströmung längs eines Strömungswegs in dem Hohlraum zu steuern, eine Arbeitseinheit (27) und einen fluiddynamischen Kreis umfasst, wobei der Behälter (2) mit der Arbeitseinheit (27) lösbar verbunden ist; und der fluiddynamische Kreis durch Trennen des Behälters (2) von der Arbeitseinheit (27) getrennt werden kann.

2. Nahrungsmittelzubereitungsanlage nach Anspruch 1, wobei der Nahrungsmittelzubereitungsbehälter (2) ferner ein erstes Ventil (3) und ein zweites Ventil (3) umfasst, die den Hohlraum (15) mit der äußeren Umgebung verbinden, wobei eines der Ventile ein Fluideinlassventil ist und das andere der Ventile ein Fluidauslassventil ist.

3. Nahrungsmittelzubereitungsanlage nach Anspruch 1 oder 2, wobei der Behälter (2) ein Werkzeug aufweist, um die Nahrungsmittel zu verarbeiten.

4. Nahrungsmittelzubereitungsanlage nach einem der vorhergehenden Ansprüche, wobei in dem Hohlraum über die gesamte Höhe des Behälters (2) eine Trenneinrichtung (26) vorgesehen ist.

5. Nahrungszubereitungsanlage nach einem der vorhergehenden Ansprüche, wobei sich der Strömungsweg über den gesamten Hohlraum (15) erstreckt.

6. Anlage nach Anspruch 1, wobei die Arbeitseinheit (27) eine Heizeinrichtung umfasst.

7. Anlage nach Anspruch 1 oder 6, wobei die Arbeitseinheit (27) ein Fluidauslassventil und ein Fluideinlassventil umfasst.

8. Anlage nach einem der Ansprüche 1, 6, 7, wobei die Arbeitseinheit (27) ein Befestigungselement (5) umfasst, um den Verarbeitungsbehälter (2) mit der Arbeitseinheit (27) zu verbinden.

9. Anlage nach einem der Ansprüche 1, 6-8, wobei die Arbeitseinheit (27) öffnungselemente (21) umfasst, die die Ventile (3) des Behälters (2) öffnen, wenn der Behälter mit der Arbeitseinheit (27) verbunden ist.

10. Anlage nach einem der Ansprüche 7-9, wobei das Einlassventil der Arbeitseinheit (27) konfiguriert ist, um Wasser hindurchströmen zu lassen und Dampf anzuhalten.

11. Anlage nach Anspruch 10, wobei das Einlassventil ein Schwimmerelement (17) umfasst.

12. Anlage nach einem der Ansprüche 1, 6-11, wobei der Behälter (2) einen Griff (9) mit einer Vorrichtung umfasst, die bei Ausübung einer äußeren Kraft ermöglicht, dass der Behälter von der Arbeitseinheit (27) getrennt wird.

13. Anlage nach einem der Ansprüche 1, 6-12, die einen Sensor (7) umfasst, um die Temperatur der Innenwand (16) des Verarbeitungsbehälters (2) zu messen.

14. Anlage nach einem der Ansprüche 1, 6-13, wobei die Arbeitseinheit (27) ein programmierbares Steuersystem umfasst.

## Revendications

1. Equipement de préparation de nourriture comprenant un récipient de préparation de nourriture (2) comprenant un mur double (16, 23) définissant une cavité fermée (15) et au moins une valve (3) pour contrôler un flux de fluide le long d'un chemin de flux à l'intérieur de la cavité, une unité opérante (27) et un circuit de fluide-dynamique, dans lequel le récipient (2) est connecté de façon amovible à l'unité opérante (27); et le circuit de fluide-dynamique est interruptible en déconnectant le récipient (2) de l'unité opérante (27).

2. Equipement de préparation de nourriture selon la revendication 1, dans lequel le récipient de préparation de nourriture (2) comprend en outre une première valve (3) et une seconde valve (3), lesquelles connectent la cavité (15) avec l'environnement extérieur, dans lequel une des valves est une valve d'entrée de fluide et l'autre est une valve de sortie de fluide.

3. Equipement de préparation de nourriture selon les revendications 1 ou 2, dans lequel le récipient (2) comprend un outil pour traiter la nourriture.

4. Equipement de préparation de nourriture selon une des revendications précédentes, dans lequel un séparateur (26) est disposé à l'intérieur de la cavité le long de toute la hauteur du récipient (2).

5. Equipement de préparation de nourriture selon une des revendications précédentes, dans lequel le chemin de flux s'étend sur toute la cavité (15).

6. Equipement selon la revendication 1, dans lequel l'unité opérante (27) comprend un appareil de chauffage.

7. Equipement selon les revendications 1 ou 6, dans lequel l'unité opérante (27) comprend une valve de sortie de fluide et une valve d'entrée de fluide.

8. Equipement selon une des revendications 1, 6, 7, dans lequel l'unité opérante (27) comprend un élément de fixation (5) pour connecter le récipient de traitement (2) à l'unité opérante (27).

9. Equipement selon une des revendications 1, 6-8, dans lequel l'unité opérante (27) comprend des éléments d'ouverture (21) qui ouvrent les valves (3) du récipient (2) quand le récipient est connecté à l'unité opérante (27).

10. Equipement selon une des revendications 7-9, dans lequel la valve d'entrée de l'unité opérante (27) est configurée pour laisser traverser l'eau et pour arrêter la vapeur.

11. Equipement selon la revendication 10, dans lequel la valve d'entrée comprend un élément flottant (17).

12. Equipement selon une des revendications 1, 6-11, dans lequel le récipient (2) comprend une poignée (9) avec un dispositif, qui sous l'application d'une force extérieure permet au récipient d'être déconnecté de l'unité opérante (27).

13. Equipement selon une des revendications 1, 6-12 comprenant un capteur (7) pour mesurer la température du mur interne (16) du récipient de traitement (2).

14. Equipement selon une des revendications 1, 6-13, dans lequel l'unité opérante (27) comprend un système de contrôle programmable.
